# EUROPÄISCHE PATENTSCHRIFT

(11) **EP 1 969 435 B1**
(45) Veröffentlichungstag und Bekanntmachung des Hinweises auf die Patenterteilung: **16.11.2011**
(21) Anmeldenummer: 06829788.6
(22) Anmeldetag: 20.12.2006
(51) Int. Cl.: G05B 19/406

(54) **VORRICHTUNG ZUM STEUERN MINDESTENS EINER MASCHINE**
APPARATUS FOR CONTROLLING AT LEAST ONE MACHINE
DISPOSITIF POUR COMMANDER AU MOINS UNE MACHINE

(30) Priorität: 03.01.2006 DE 102006000635
(43) Veröffentlichungstag der Anmeldung: 17.09.2008
(73) Patentinhaber: KUKA Laboratories GmbH, 86165 Augsburg (DE)
(72) Erfinder: FIEBIGER, Bernd, 86399 Bobingen (DE)
(74) Vertreter: Schlotter, Alexander Carolus Paul
(86) Internationale Anmeldenummer: PCT/EP2006/012345
(87) Internationale Veröffentlichungsnummer: WO 2007/076939

(56) Entgegenhaltungen:
- EP-A- 0 264 350
- US-A1- 2003 050 735

## Beschreibung

Die Erfindung betrifft ein Verfahren zum Steuern mindestens einer über eine Antriebstechnik angesteuerten Maschine, wie eines Industrieroboters, mit jeweils einer Robotersteuerung sowie eine zur Ausführung des Varfahrens eingerichtete Vorrichtung

Sicherheitstechnische Vorrichtungen haben die Funktion Gefahren, die beim Betrieb von technischen Anlagen ausgehen, auf ein Mindestmaß zu reduzieren. Eine Standardisierung eines solchen Mindestmaßes ist beispielsweise durch die europäische Norm EN 954-1 gegeben, in der sicherheitstechnische Komponenten mit zunehmender Betriebssicherheit in Sicherheitskategorien von 1 bis 4 eingestuft werden. Die Erfindung bezieht sich insbesondere auf Sicherungskomponenten bzw. -funktionen, die zumindest Sicherheitskategorie 3 erfüllen, also mindestens Einfehlersicherheit gewährleisten.

Ein Beispiel für eine solche sichere Komponente ist ein Sicherheitsbus, der eine sichere Verbindung zwischen zwei Komponenten herstellt. Unter der Bezeichnung "sicher" wird im Zusammenhang mit Antriebsfunktionen ein Verfahren verstanden, das im Fehlerfall die Anforderungen einer der Risikoanalyse zugehörigen Kategorie nach der Norm EN 954-1 erfüllt. Diese Definition von "sicher" ist auf alle einer Automatisierungslösung zugehörigen Komponenten, also auch auf "Technik", "Steuerung", "Verbindungen" und "Ein-/Ausgängen" anwendbar.

Um einen sicheren Ablauf während des Betriebs einer technischen Anlage zu gewährleisten, ist eine sicherheitstechnische Überwachung der Betriebssteuerung und ggf. ein sicherheitstechnischer Eingriff in den Betriebsablauf nötig. Dabei findet üblicherweise ein vom Betriebssteuerkreis getrennter Sicherheitssteuerkreis Verwendung, wobei beide Steuerkreise an sicherheitsrelevanten Stellen verknüpft sind. Als Beispiel kann in den Sicherheitssteuerkreis ein Not-Aus-Schalter integriert sein, bei dessen Betätigung ein sicheres Anhalten des Antriebs der technischen Anlage in der Regel durch Schalten eines Schutzes in der Leistungsversorgung erzwungen wird.

Falls die technische Anlage mehrere unabhängig voneinander agierende Maschinen, wie z.B. Roboter umfasst, ist bei Auftreten eines sicherheitstechnischen Problems bei einer Maschine ein sicheres Anhalten der gesamten Anlage nicht wünschenswert. Andererseits kann, falls mehrere Maschinen im Verbund agieren, der Ausfall einer Maschine auch ein Sicherheitsrisiko für andere, beispielsweise benachbarte Maschinen hervorrufen.

Zur Behebung dieses Problems sind Betriebssteuerkreise und Sicherheitssteuerkreise bekannt, die der gesamten Anlage übergeordnet sind und die nach einem sicherheitstechnischen Vorfall über logische Verknüpfungen oder Algorithmen sicherheitsgefährdete Maschinen einer Sicherheitsfunktion zuordnen und diese in einen Sicherheitsbetriebsmodus überführen, während ungefährdete Maschinen im Normalbetrieb bleiben. Solche der gesamten Anlage übergeordnete Systeme sind exakt auf die Sicherheitsbedürfnisse der jeweiligen Anlage abgestimmt, was eine relativ komplexe, jedoch auch eine starr auf die Einzelkomponenten angepasste Schaltungslogik mit sich bringt. Schon bei einer geringfügigen Änderung der Anlage, z.B. einer geänderten Anordnung einzelner Maschinen, kann möglicherweise das vorhandene Sicherheitssystem nicht mehr ausreichend sein. Aus diesem Grund ist insbesondere bei Industrierobotern, die in einem Verbund arbeiten, ein flexibleres und leicht konfigurierbares Sicherheitssystem wünschenswert, da hier die Funktion der Einzelroboter über einen kurzen Zeitrahmen hinweg variieren kann bzw. zusätzliche Roboter zum Einsatz kommen können.

Beim Zusammenwirken mehrerer Roboter in einem Verbund ist die funktionale Sicherheit des Gesamtsystems jedoch in der Regel nicht gegeben, da beispielsweise durch einen Funktionsfehler eines Roboters neue Fehlerquellen für die verbleibenden Roboter des Verbunds entstehen können. Diese sind in den Sicherheitsanforderungen des Einzelroboters nicht vorgesehen und auch nicht vorsehbar, insbesondere wegen der vielen Freiheitsgrade eines solchen Systems von Robotern, wie beispielsweise Anzahl, Funktion und Standort der einzelnen Roboter.

Bei einer aus der Praxis bekannten Sicherheitssteuerung nach dem Stand der Technik wird einem Roboter eine Robotersteuerung, Sicherheitsperipheriekomponenten und eine Antriebstechnik zugeordnet. Zwischen der Robotersteuerung und der Antriebstechnik besteht eine Verbindung, über die Antriebsdaten ausgetauscht werden. Zwischen den Sicherheitsperipheriekomponenten und der Antriebstechnik ist notwendigerweise eine vorgegebene Verbindungseinrichtung vorhanden, die in sicherer Technik ausgebildet ist. Die Sicherheitsperipheriekomponenten sind über sichere Ein- und Ausgänge mit einer von ihr getrennt angeordneten, externen Sicherheitssteuerung verbunden. Aufgrund der fest vorgegebenen sicheren Verbindung zwischen den Sicherheitsperipheriekomponenten und der Antriebstechnik sind die sicherheitsrelevanten Eigenschaften festgelegt und können nicht ohne weiteres verändert oder an individuelle Konfigurationen angepasst werden. Die Sicherheitssteuerung kann nur über den Umweg der Sicherheitsperipheriekomponenten auf die Antriebstechnik einwirken.

Aus der EP 0 264 350 A1 ist ein Verfahren nach dem Oberbegriff des Anspruchs 1 sowie eine technische Anlage mit einem Roboter, einem Sicherheitskreis und einer Überwachungsschaltung bekannt, die Signale von dem Sicherheitskreis und dem Roboter erhält und an einen Prozessor des Roboters ausgibt, wobei die Überwachungsschaltung im Fehlerfall betroffene Anlagenteile leistungsmäßig ausschaltet.

Die US 2003/0050735 A1 offenbart eine Sicherheitsschaltung, die eine Mehrzahl von Sensoren auf das Eindringen oder Personen in den Arbeitsraum eines Roboters überwacht.

Der Erfindung liegt die Aufgabe zugrunde, eine Vorrichtung und ein Verfahren zur Sicherheitssteuerung einer oder eines Verbunds mehrerer Maschinen, insbesondere Industrierobotern, zu schaffen, die unter Vermeidung der vorgenannten Nachteile insbesondere eine flexible und leicht konfigurierbare Anpassung an variierende Sicherheitsanforderungen ermöglicht.

Erfindungsgemäß wird diese Aufgabe durch ein Verfahren nach Anspruch 1 bzv. eine Vorrichtung nach Anspruch 3 gelöst.

Demgemäß sieht eine bevorzugte verfahrensmäßige Ausgestaltung vor, dass die Sicherheitssteuerung die sicherheitsbezogenen Steuerungssignale unter Umgehung der Sicherheitsperipheriekomponenten direkt an die Antriebstechnik weiterleitet, wobei dies vorzugsweise über eine sichere Ein- und Ausgangsschnittstelle geschieht.

Durch die Erfindung ist die bisherige starre Verbindung zwischen (internen) Sicherheitsperipheriekomponenten und Antriebstechnik in eine frei definierbare Verbindung über die zusätzliche Sicherheitssteuerung umgewandelt, so dass sicherheitsrelevante Informationen und Daten, die zwischen den Sicherheitsperipheriekomponenten und der Antriebstechnik ausgetauscht werden, über die Sicherheitssteuerung laufen und durch diese ausgewertet und beeinflusst werden können.

Die Verbindungseinrichtungen sind, insbesondere als sichere, in der Regel durch Bussysteme realisiert, sie können aber auch grundsätzlich in anderer Weise ausgebildet sein, insbesondere nicht sichere Verbindungseinrichtungen durch sonstige Verdrahtung, oder auch drahtlos.

Neben der jeweiligen einzeln ausgebildeten Maschinensteuerung hat also auch die Sicherheitssteuerung Zugriff sowohl auf die jeweiligen Maschinenantriebe als auch auf die Sicherheitsperipheriekomponenten der einzelnen Maschinen, und somit auf die in den Sicherheitsperipheriekomponenten realisierten Sicherheitsfunktionen. Dadurch wird erfindungsgemäß eine funktionale Trennung zwischen der Eigensicherheit einzelner Maschinen und einer übergeordneten Systemsicherheit erzielt. Die standardisierten Sicherheitsfunktionen können sicheres Anhalten, sicherere Abbremsen, sicheres Bewegen mit reduzierter Geschwindigkeit und/oder sicheres Einnehmen einer Absolutlage mit oder ohne externer Betätigung eines Zustimmschalters umfassen. Zusätzlich können auch einige der vorher genannten oder andere Sicherheitsfunktionen in der Sicherheitssteuerung selbst logisch definiert und direkt über den Zugriff auf die jeweiligen Maschinenantriebe ausführbar sein. Diese können erfindungsgemäß sowohl zur Erhöhung der Eigensicherheit einzelner Maschinen als auch der Systemsicherheit beitragen.

Die Sicherheitssteuerung besitzt gegenüber der Steuerung der jeweiligen Maschine(n) ein übergeordnetes Zugriffsrecht auf die jeweiligen Sicherheitskomponenten und Antriebe. Nur so kann ein sicherer Betrieb des Gesamtsystems erreicht werden. Dabei kann die Sicherheitssteuerung je nach Bedarf auf die Sicherheitsfunktionen einer, mehrerer oder aller mit der Sicherheitssteuerung verbundener Maschinen zugreifen. Die Einführung einer solchen Sicherheitshierarchie führt erfindungsgemäß zu einer ortsnahen Integration der Sicherheitsfunktionen an die jeweiligen Gefahrenherde, wodurch eine weitestgehend einfache Anpassung der Sicherheitssteuerung an Systemänderungen ermöglicht ist.

Die Ansteuerung der jeweiligen Sicherheitsperipheriekomponenten und Antriebe von der Sicherheitssteuerung erfolgt über sichere Verbindungen. Hierzu können Anschlüsse der Sicherheitssteuerung fest mit den Sicherheitsperipheriekomponenten und mit den Antrieben der jeweiligen Maschine verdrahtet sein, wobei zur Gewährleistung der Sicherheit diese Verdrahtung zumindest mehrkanalig ausgebildet sein muss. Auch diese Anschlüsse müssen mit der Sicherheitssteuerung selbst sicher verbunden sein, was beispielsweise über einen sicheren Feldbus realisiert werden kann.

Soweit die Verbindung zwischen Sicherheitssteuerung und den jeweiligen Sicherheitsperipheriekomponenten bzw. Antrieben über sichere Bussysteme erfolgt, wird auf einfache Weise ein Sicherheitsstandard erreicht und der Verkabelungsaufwand minimiert. Die Ansteuerung der Sicherheitsperipheriekomponenten bzw. Antriebe mittels sicherer Busse muss über sichere Schnittstellen erfolgen.

Gemäß einer bevorzugten Ausgestaltung der erfindungsgemäßen Vorrichtung ist vorgesehen, dass die Sicherheitsperipheriekomponenten über die Sicherheitssteuerung mit der Robotersteuerung verbunden sind.

In bevorzugter Weiterbildung ist vorgesehen, dass die Sicherheitsperipheriekomponenten ausschließlich über die Sicherheitssteuerung sowohl mit der Antriebstechnik als auch mit der Robotersteuerung verbunden sind. Es kann weiterhin vorgesehen sein, dass die verbindung zwischen Antriebstechnik und Sicherheitssteuerung über eine zweite sichere Verbindungseinrichtung erfolgt, wobei insbesondere die erste sichere Verbindungseinrichtung und die zweite sichere Verbindung in fester und redundanter Verdrahtung ausgeführt sind und/oder die erste sichere Verbindungseinrichtung und die zweite sichere Verbindungseinrichtung über sichere Schnittstellen geführt sind.

Vorzugsweise ist die Robotersteuerung über einen weiteren Kommunikationspfad mit der Sicherheitssteuerung verbunden. Hierüber kann ein Austausch von zur Konfiguration bzw. zur Fehlerdiagnose benötigter Daten erfolgen. Falls es sich um sicherheitsrelevante Daten handelt, sollte der zweite Kommunikationspfad auch als sichere Verbindung ausgeführt sein, wie einen sicheren Feldbus. Die Sicherheitssteuerungen können räumlich in den Steuerschrank der Robotersteuerung integriert sein oder aber alternativ als autarke Komponenten außerhalb des Steuerschrankes platziert sein.

Die genannten sicheren Busverbindungen sind erfindungsgemäß erweiterbar, um Anschlüsse für weitere sicherheitsrelevante Komponenten mit der Sicherheitssteuerung zu schaffen, wie z.B. Not-Aus-Schalter, zustimmschalter, Lichtschranken etc. Auch hier kommen die Vorteile der Erfindung zum tragen: Eine beliebige technische Anlage mit beispielsweise nur einer Maschine kann mit beliebigen Sicherheitsvorkehrungen ausgerüstet werden und die Anpassung der Anlagensicherheitslogik kann getrennt von der Maschinensteuerung und den von dieser angesteuerten Sicherheitsperipherien vorgenommen werden. Sicherheitsrelevante Bediengeräte sind somit erfindungsgemäß von der eigentlichen Sicherheitsperipherie der einzelnen Maschine(n) abkoppelbar.

Weiterhin kann vorgesehen sein, dass die Sicherheitssteuerung über eine weitere sichere Verbindungseinrichtung mit einer übergeordneten Zellensicherheitssteuerung verbunden sind. In bevorzugter Weiterbildung ist vorgesehen, dass die Sicherheitssteuerung frei programmierbar ausgeführt ist, wobei insbesondere die Sicherheitssteuerung je nach Anordnung, Funktion und Anzahl der Maschinen konfigurierbare nichtphysische Funktionsbestandteile zur Steuerung der jeweiligen Sicherheitsfunktionen aufweist.

Eine solche SPS (speicherprogrammierbare Steuerung) bietet den Vorzug, mittels eines darin vorgesehenen Anwenderprogramms eine Anpassung des bestehenden Sicherheitssystems an neue Sicherheitskomponenten und neue Sicherheitsanforderungen möglichst einfach und kostengünstig zu gestalten. Hierbei können erfindungsgemäß auch neue Sicherheitsfunktionen für die jeweilige(n) Maschine(n) durch neue Programmmodule realisiert werden, die in den bestehenden Sicherheitsperipheriekomponenten nicht vorgesehen sind, und somit die Betriebssicherheit erhöht werden. Diese sollten jedoch aus Sicherheitsgründen in einem dem Anwender nicht zugänglichen, vom Anwenderprogramm getrennten, Betriebsprogramm angesiedelt sein.

Eine Weiterbildung des erfindungsgemäßen Verfahrens sieht insbesondere beim Einsatz mehrerer Maschinen, wie Roboter, vor, dass eine übergeordnete Zellensicherheitssteuerung zusätzliche sicherheitsrelevante Signale an die Sicherheitssteuerungen mehrerer Maschinen sendet, wobei insbesondere die sicherheitsrelevanten Signale der Sicherheitssteuerung durch die Robotersteuerungen, die Sicherheitsperipheriekomponenten und/oder die Antriebstechnik der jeweiligen Maschine zur Einleitung eines sicheren Zustandes, gegenüber anderen Steuerungen, insbesondere einer übergeordneten Zellensicherheitssteuerung bevorzugt behandelt werden.

Nachfolgend ist die Erfindung anhand bevorzugter Ausführungsformen unter Bezugnahme auf die Zeichnungen näher erläutert. Es zeigen:
- Fig. 1: ein Blockschaltbild einer ersten Variante einer erfindungsgemäßen Vorrichtung mit einer sicheren Verdrahtung zwischen der Sicherheitssteuerung und den Sicherheitsperipheriekomponenten, den Antrieben und optional der Robotersteuerung eines Roboters;
- Fig. 2: ein Blockschaltbild einer zweiten Variante einer erfindungsgemäßen Vorrichtung mit einer Verbindung zwischen der Sicherheitssteuerung und den Sicherheitsperipheriekomponenten, den Antrieben und optional der Robotersteuerung mittels sicherer Bussysteme;
- Fig. 3: ein Blockschaltbild einer Mehrzahl von erfindungsgemäßen Vorrichtungen mit einer übergeordneten Zellensicherheitssteuerung.

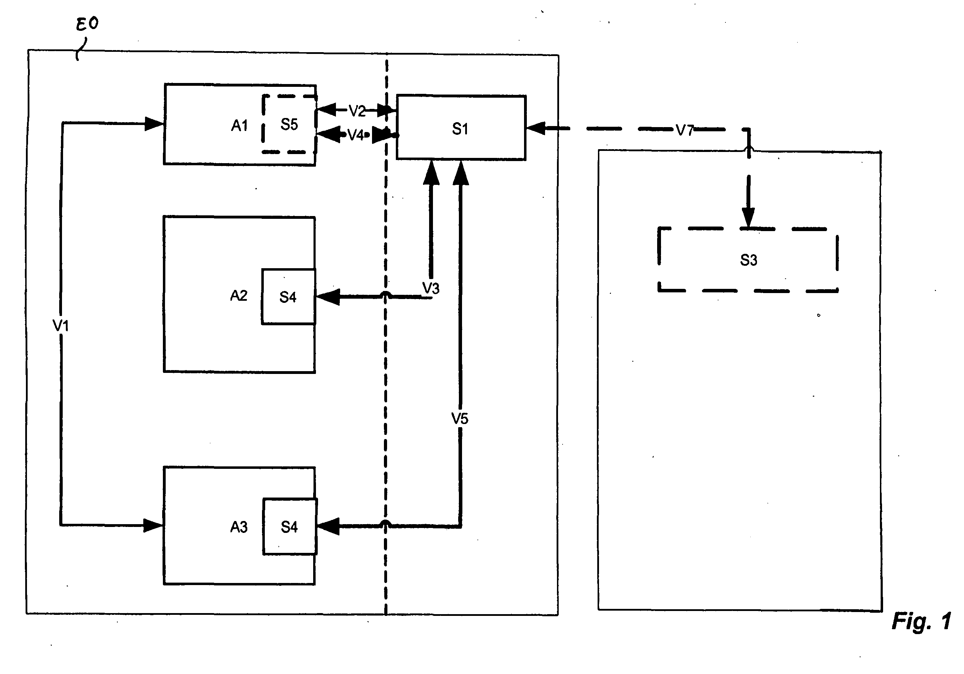

Fig. 1 zeigt ein Blockschaltbild einer ersten Variante einer erfindungsgemäßen Vorrichtung mit einer sicheren Verdrahtung zwischen einer Sicherheitssteuerung S1 und Sicherheitsperipheriekomponenten A2, Antrieben A3 und optional einer Robotersteuerung A1 eines Roboters. Erfindungsgemäß ist eine vorzugsweise frei konfigurierbare Sicherheitssteuerung S1 entweder in den Steuerschrank E0 des Roboters integriert oder autark an diesen anschließbar. Die Sicherheitssteuerung S1 ist über eine erste fest verdrahtete sichere Verbindungseinrichtung V3 mit den Sicherheitsperipheriekomponenten A2 verbunden. Des Weiteren ist die Sicherheitssteuerung S1 über eine zweite fest verdrahtete sichere Verbindungseinrichtung V5 mit der Antriebstechnik A3 verbunden. Zwischen den Sicherheitsperipheriekomponenten A2 und der Antriebstechnik A3 besteht keine direkte sichere Verbindung; diese Verbindung kann vorzugsweise sogar ganz entfallen. Ergänzend kann die Sicherheitssteuerung S1 entweder über eine sichere Verbindungseinrichtung V4 oder eine nichtsichere Verbindungseinrichtung V2 mit der Robotersteuerung A1 verbunden sein. Zur Ansteuerung des Roboters ist weiterhin eine Verbindungseinrichtung V1 zwischen Robotersteuerung A1 und der Antriebstechnik A3 erforderlich. Diese Verbindung V1 kann jedoch in nichtsicherer Technik ausgeführt sein. Die dargestellte direkte Verbindung der Sicherheitsperipheriekomponenten A2 mit der Sicherheitssteuerung S1 über die sichere verbindungseinrichtung V3 könnte durch eine zusätzliche sichere Verbindungseinrichtung zwischen der Robotersteuerung A1 und der Sicherheitsperipheriekomponenten A2 ersetzt sein. Dabei ist die Verbindung zwischen der Sicherheitssteuerung S1 und der Robotersteuerung A1 über die sichere Verbindungseinrichtung V4 erforderlich. Dadurch ist eine indirekte Verbindung zwischen der Sicherheitssteuerung S1 und der Sicherheitsperipheriekomponenten A2 über die Robotersteuerung A1 geschaffen und die sichere verbindungseinrichtung V3 kann entfallen.

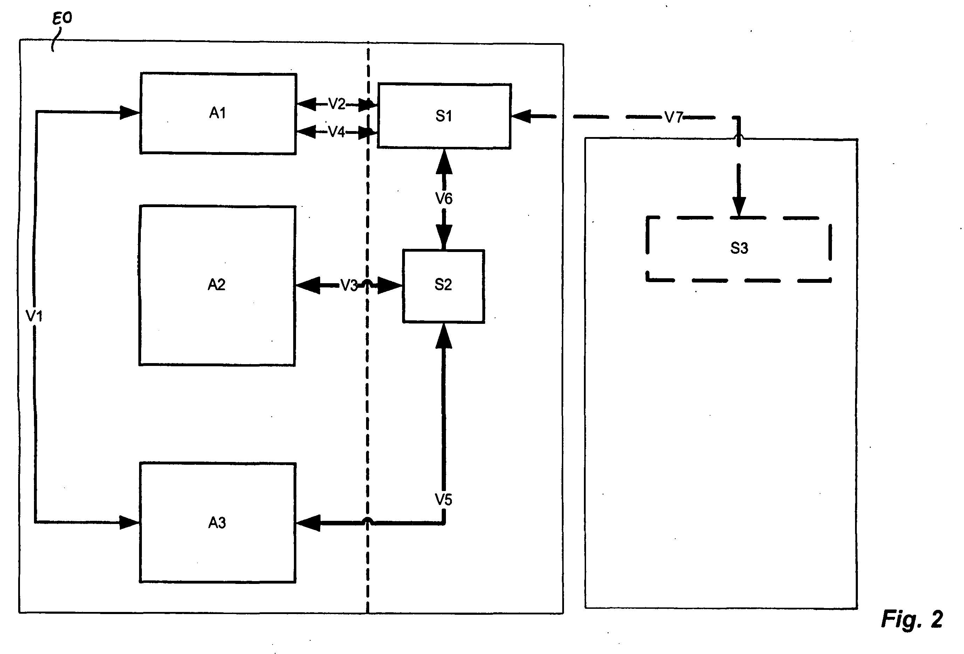

Fig. 2 zeigt ein Blockschaltbild einer zweiten Variante einer erfindungsgemäßen Vorrichtung mit einer Verbindung zwischen der Sicherheitssteuerung S1 und den Sicherheitsperipheriekomponenten A2, der Antriebstechnik A3 und optional der Robotersteuerung A1 mittels Verbindungseinrichtungen V2, V3, V5 in Form sicherer Bussysteme. Die Sicherheitssteuerung S1 ist über eine sichere Verbindungseinrichtung V6 mit einer sicheren Ein- und Ausgangs-Schnittstelle S2 verbunden. Die sichere Ein- und Ausgangs-Schnittstelle S2 ihrerseits koppelt die Sicherheitsperipheriekomponenten A2 und die Antriebstechnik A3 an die Sicherheitssteuerung S1. Die Sicherheitsperipheriekomponenten A2 sind über die erste sichere Verbindungseinrichtung V3 an die sichere Ein- und Ausgangs-Schnittstelle S2 angebunden. Die Antriebstechnik A3 ist über die zweite sichere Verbindungseinrichtung V5 an die sichere Ein- und Ausgangs-Schnittstelle S2 angebunden. Auch in dieser Variante besteht zwischen den Sicherheitsperipheriekomponenten A2 und der Antriebstechnik A3 keine direkte sichere Verbindung mehr, diese Verbindung kann vorzugsweise sogar ganz entfallen. Ergänzend kann die Sicherheitssteuerung S1 wiederum entweder über eine sichere Verbindungseinrichtung V4 oder eine nichtsichere Verbindungseinrichtung V2 mit der Robotersteuerung A1 verbunden sein. Zur Ansteuerung des Roboters ist weiterhin eine Verbindungseinrichtung V1 zwischen Robotersteuerung A1 und der Antriebstechnik A3 erforderlich. Diese Verbindungseinrichtung V1 kann jedoch in nichtsicherer Technik ausgeführt sein. Die dargestellte Verbindung der Sicherheitsperipheriekomponenten A2 mit der Sicherheitssteuerung S1 über die die sichere Ein- und Ausgangs-Schnittstelle S2 mittels der sicheren Verbindungseinrichtungen V3 und V6 könnte durch eine zusätzliche sichere Verbindungseinrichtung zwischen der Robotersteuerung A1 und der Sicherheitsperipheriekomponenten A2 ersetzt sein. Dabei ist die Verbindung zwischen der Sicherheitssteuerung S1 und der Robotersteuerung A1 über die sichere Verbindung V4 erforderlich. Dadurch ist eine indirekte Verbindung zwischen der Sicherheitssteuerung S1 und der Sicherheitsperipheriekomponenten A2 über die Robotersteuerung A1 geschaffen und die sicheren Verbindungseinrichtungen V3 und V6 können entfallen.

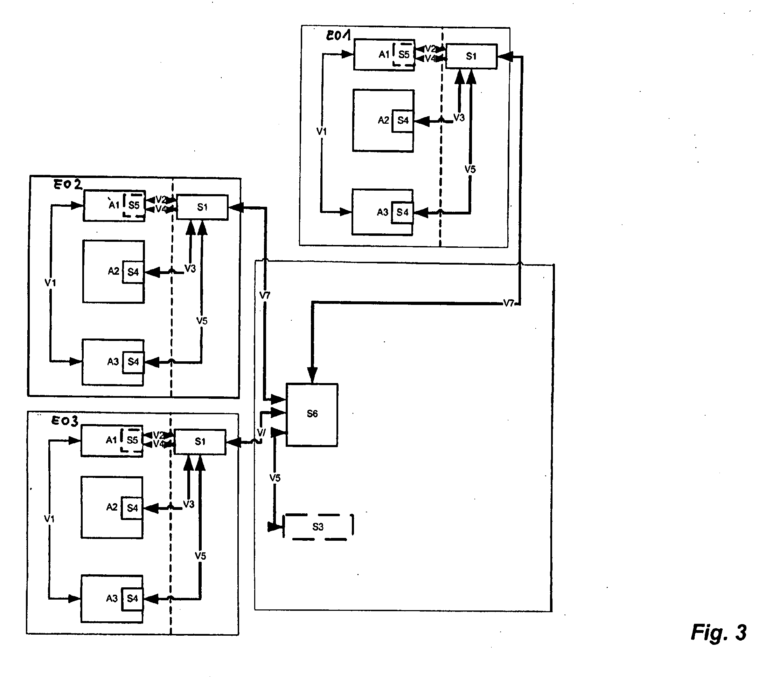

Fig. 3 zeigt ein Blockschaltbild einer Mehrzahl von erfindungsgemäßen Vorrichtungen mit einer übergeordneten Zellensicherheitssteuerung. In dem dargestellten Beispiel sind drei Roboter an eine gemeinsame Zellensicherheitssteuerung S6 angebunden. Die Robotersteuerungseinheiten E01 bis E03 sind in Fig.3 am Beispiel der Variante aus Fig. 1 abgebildet. Es können jedoch auch in analoger Weise die Robotersteuerungseinheiten E01 bis E03 gemäß der zweiten Variante aus Fig. 2 ausgebildet sein. Selbstverständlich können auch Robotersteuerungseinheiten gemäß der Variante aus Fig. 1 mit Robotersteuerungseinheiten gemäß der Variante aus Fig. 2 beliebig kombiniert sein. Jede Robotersteuerungseinheit E01 bis E03 kommuniziert mit der übergeordneten Zellensicherheitssteuerung S6 über eigene sichere Verbindungseinrichtungen V7.

In allen erfindungsgemäßen Varianten und nicht nur in den als Ausführungsbeispielen dargestellten, weist die erfindungsgemäße Sicherheitssteuerung S1 zur Schaffung einer übergeordneten Systemsicherheit eine Sicherheitskomponente auf, die in bevorzugter Ausführung frei konfigurierbar ist, um eine einfache und kostengünstige Anpassung an die jeweiligen Sicherheitsanforderungen des Systems zu ermöglichen. Sie kann beispielsweise nichtphysische Funktionsabschnitte wie frei programmierbare Module aufweisen.

Durch den mittels der Verbindungseinrichtung V3 realisierten erfindungsgemäß vorgesehenen sicheren Kommunikationspfad mit den Sicherheitsperipheriekomponenten A2 des Roboters hat die Sicherheitssteuerung S1 Zugriff auf die jeweiligen Sicherheitsfunktionen. Weiterhin können über den durch die Verbindungseinrichtung gebildeten sicheren Kommunikationspfad mit der Antriebseinheit A3 des Roboters auch andere Sicherheitsfunktionen in der Sicherheitsperipheriekomponenten A2 der Sicherheitssteuerung S1 verankert sein. Diese können in Form von programmierbaren Programmmodulen vorliegen, auf die der Anwender aus Sicherheitsgründen keinen Zugriff haben sollte.

Die sicheren Busverbindungseinrichtungen V3 und V5 der Sicherheitssteuerung S1 sind beliebig erweiterbar, um einen sicheren Kommunikationspfad für Ein- bzw. Ausgänge weiterer Sicherheitskomponenten S3 zu schaffen. Hierbei kann es sich um Schalter oder Sensoren zum Auslösen einer Sicherheitsfunktion handeln, wie z.B. Not-Aus-Schalter, Zustimmschalter, Lichtschranken oder eine Schutztür.

In einer weiteren bevorzugten Ausführung der Erfindung ist ein weiterer Kommunikationspfad V2 zwischen der Robotersteuerung A1 des Roboters und der Sicherheitssteuerung S1 vorgesehen. Somit wird auch ein Austausch von Betriebsdaten zwischen diesen beiden Komponenten ermöglicht. Falls es sich um sicherheitsrelevante Daten handelt, sollte dies eine sichere Verbindungseinrichtung V4 sein, wie z.B. ein Sicherheitsbus.

Die in Fig. 1 und Fig. 2 gezeigten Ausführungsformen der Erfindung dienen zur Steuerung nur eines Roboters, stellvertretend für eine beliebige Anzahl von Robotern in anderen bevorzugten Ausführungsformen der Erfindung, wie in Figur 3 dargestellt. Es versteht sich, dass die Vorzüge der Erfindung vor allem bei einer größeren Anzahl von Robotern, die in einem Verbund arbeiten, zum Vorschein treten, bzw. wenn ein Verbund von Robotern erweitert oder andersartig angeordnet werden soll, wodurch die Sicherheitsanforderungen an das System verändert werden. In einer bevorzugten Ausführung mit einer Mehrzahl von Robotern erfolgt die Verbindung zwischen den einzelnen Komponenten der jeweiligen Roboter mit den zugehörigen Sicherheitssteuerungen S1 auf dieselbe Weise, wie in der in Fig. 1 oder in Fig. 2 gezeigten.

### Bezugszeichenliste

- A1: Robotersteuerung
- A2: Sicherheitsperipheriekomponente
- A3: Antriebstechnik
- E01-EO3: Robotersteuerungseinheiten
- S1: Sicherheitssteuerung
- S2: Ein- und Ausgangs-Schnittstelle
- S3: Sicherheitskomponenten
- V1-V7: Verbindungseinrichtung

## Patentansprüche

1. Verfahren zum Steuern mindestens einer über eine Antriebstechnik (A3) angesteuerten Maschine, wie eines Industrieroboters, mit jeweils einer Maschinensteuerung (A1) ,
- sicherheitsrelevante Ereignisse über Sicherheitsperipheriekomponenten (A2) erfasst werden;
- die von den Sicherheitsperipheriekomponenten (A2) erfassten Ereignisse als Signale an eine Sicherheitssteuerung (S1) übertragen werden;
- die Sicherheitssteuerung (S1) die Signale auswertet und in Abhängigkeit der Auswertung sicherheitsbezogene Steuerungssignale direkt an die Antriebstechnik (A3) weiterleitet,
, **dadurch gekennzeichnet, dass** eine übergeordnete Zellensicherheitssteuerung (S3) zusätzliche sicherheitsrelevante Signale an die Sicherheitssteuerungen (S1) mehrerer Maschinen (1) sendet, und/oder
dass die sicherheits bezogen en Signale der Sicherheitssteuerung (S1) durch die Maschinensteuerungen (A1), die Sicherheitsperipheriekomponenten (A2) und/oder die Antriebstechnik (A3) der jeweiligen Maschine zur Einleitung eines sicheren Zustandes, gegenüber anderen Steuerungen, insbesondere einer übergeordneten Zellensicherheitssteuerung (S3) bevorzugt behandelt werden.

2. Verfahren nach Anspruch 1 **dadurch gekennzeichnet, dass** die Sicherheitssteuerung (S1) die sicherheitsbezogenen Steuerungssignale über eine sichere Ein- und Ausgangs-Schnittstelle (S2) und/oder Umgehung der Sicherheitsperipheriekomponenten (A2) an die Antriebstechnik (A3) weiterleitet.

3. Vorrichtung (EO, EO1, EO2, EO3) zum Steuern mindestens einer Maschine, wie eines Industrieroboters, mit jeweils einer Antriebstechnik (A3) zur Ansteuerung der Maschine, einer Robotersteuerung (A1), die über einen erste Verbindungseinrichtung (V1) mit der Antriebstechnik (A3) verbunden ist, und mit Sicherheitsperipheriekomponenten (A2), die über eine erste sichere Verbindungseinrichtung (V3; V6) mit einer Sicherheitssteuerung (S1) verbunden sind, wobei die Sicherheitsperipheriekomponenten (A2) über die Sicherheitssteuerung (S1) mit der Antriebstechnik (A3) verbunden sind, **dadurch gekennzeichnet, dass** die Vorrichtung zur Ausführung eines Verfahrens nach Anspruch 1 eingerichtet ist.

4. Vorrichtung nach Anspruch 3, **dadurch gekennzeichnet, dass** die Sicherheitsperipheriekomponenten (A2) über die Sicherheitssteuerung (S1) mit der Maschinensteuerung (A1) verbunden sind.

5. Vorrichtung nach Anspruch 4, **dadurch gekennzeichnet, dass** die Sicherheitsperipheriekomponenten (A2) ausschließlich über die Sicherheitssteuerung (S1) sowohl mit der Antriebstechnik (A3) als auch mit der Maschinensteuerung (A1) verbunden sind.

6. Vorrichtung nach einem der Ansprüche 3 bis 5, **dadurch gekennzeichnet, dass** die Verbindung zwischen Antriebstechnik (A3) und Sicherheitssteuerung (S1) über eine zweite sichere Verbindungseinrichtung (V5) erfolgt.

7. Vorrichtung nach Anspruch 6, **dadurch gekennzeichnet, dass** die erste sichere Verbindungseinrichtung (V3; V6) und die zweite sichere Verbindung (V5,V6) in fester und redundanter Verdrahtung ausgeführt oder über sichere Schnittstellen (S2, S4)geführt sind.

8. Vorrichtung nach einem der vorangehenden Ansprüche 3 bis 7, **dadurch gekennzeichnet, dass** die Maschinensteuerung (A1) über einen weiteren Kommunikationspfad (V2, V4) mit der Sicherheitssteuerung (S1) verbunden ist.

9. Vorrichtung nach Anspruch 8, **dadurch gekennzeichnet, dass** der weitere Kommunikationspfad (V4) als sichere Verbindung ausgeführt ist.

10. Vorrichtung nach einem der vorangehenden Ansprüche 3 bis 9, **dadurch gekennzeichnet, dass** die erste Verbindung (V1) über mindestens eine der sicheren Verbindungen (V5) oder weiteren Kommunikationspfaden (V4, V2) oder V5 - V6 - V4 geführt ist.

11. Vorrichtung nach einem der vorangehenden Ansprüche 3 bis 10, **dadurch gekennzeichnet, dass** die Sicherheitssteuerung (S1) über eine weitere sichere Verbindungseinrichtung (V7) mit einer übergeordneten Zellensicherheitssteuerung (S3) verbunden sind.

12. Vorrichtung nach einem der vorangehenden Ansprüche 3 bis 11, **dadurch gekennzeichnet, dass** die Sicherheitssteuerung (S1) frei programmierbar ausgeführt ist.

13. Vorrichtung nach Anspruch 12, **dadurch gekennzeichnet, dass die** Sicherheitssteuerung (S1) vorkonfigurierte nichtphysische Funktionsbestandteile aufweist, die in Abhängigkeit von Anordnung, Funktion und Anzahl der Maschinen (1) zur Verfügung stehen und die zur Steuerung einer jeweiligen Sicherheitsfunktion aufrufbar sind.

## Claims

1. Method of controlling at least one machine, such as an industrial robot, whereas the at least one machine is driven by a drive system (A3), and whereas each machine has a control system (A1), whereas
- safety-relevant events are detected by safety peripheral components (A2);
- the events detected by the safety peripheral components (A2) are transmitted as signals to a safety controller (S1);
- the safety controller evaluates the signals and depending on the evaluation transmits safety related control signals directly to the drive system (A3);
**characterised in that**,
a superordinate cell safety controller (S3) sends additional safety-relevant signals to the safety controllers (S1) of a plurality of machines (1), and/or
that the safety-relevant signals of the safety controller (S1) by the control system (A1), the safety peripheral components (A2) and/or the drive system (A3) of each machine, for the initiation of a safe state, with respect to other controls, in particular of a superordinate cell safety controller (S3), are prioritized.

2. Method according to claim 1,
**characterised in that**,
the safety controller (S1) transmits the safety relevant control signals through a safe input and output interface (S2) and/or to the drive system (A3) by bypassing the safety peripheral components (A2).

3. Device (EO; EO1, EO2, EO3) for controlling at least one machine, such as an industrial robot, each with a control system (A3) to control the machine, with a robot control (A1), which is connected to the drive system (A3) through a first connecting device (V1), and with safety peripheral components (A2), which are connected to the safety controller (S1) through a first safe connecting device (V3; V6), whereas the safety peripheral components (A2) are connected with the drive system (A3) through the safety controller (S1),
**characterised in that,**
the device is set to perform a method according to claim 1.

4. Device according to claim 3,
**characterised in that,**
the safety peripheral components (A2) are connected to the control system (A1) through the safety controller (S1).

5. Device according to claim 4,
**characterised in that**,
the safety peripheral components (A2) are connected to the drive system (A3) as well as to the control system (A1) solely through the safety controller (S1).

6. Device according to one of the claims 3 to 5,
**characterised in that**,
the connection between the drive system (A3) and the safety controller (S1) is realised through a second safe connecting device (V5).

7. Device according to claim 6,
**characterised in that**,
the first safe connecting device (V3; V6) and the second safe connecting device (V5, V6) are realised in a fixed and redundant wiring or led through safe interfaces (S2, S4).

8. Device according to one of the preceding claims 3 to 7,
**characterised in that**,
the control system (A1) is connected through an additional communication path (V2, V4) with the safety controller (S1).

9. Device according to claim 8,
**characterised in that**,
the additional communication path (V4) is realised as safe connection.

10. Device according to one of the preceding claims 3 to 9,
**characterised in that**,
the first connection (V1) is led through at least one of the safe connections (V5) or through additional communication paths (V4, V2) or V5 - V6 - V4.

11. Device according to one of the preceding claims 3 to 10,
**characterised in that**,
the safety controller (S1) is connected to a superordinate cell safety controller (S3) through an additional safe connecting device (V7).

12. Device according to one of the preceding claims 3 to 11,
**characterised in that**,
the safety controller (S1) is realised to be freely programmable.

13. Device according to claim 12,
**characterised in that**,
the safety controller (S1) includes pre-configured non-physical function components, which are selectable based on the arrangement, function, or number of the machines (1) and which are activated for controlling a particular safety function.

## Revendications

1. Procédé de commande d'au moins une machine, telle qu'un robot industriel, actionnée par une technique d'entraînement (A3), comportant respectivement une commande de machine (A1), selon lequel
- des événements pertinents pour la sécurité sont enregistrés par des composants périphériques de sécurité (A2) ;
- les événements enregistrés par les composants périphériques de sécurité (A2) sont transmis sous forme de signaux vers une commande de sécurité (S1) ;
- la commande de sécurité (S1) analyse les signaux et, en fonction de l'analyse, transmet des signaux de commande relatifs à la sécurité directement vers la technique d'entraînement (A3),
**Caractérisé**
**en ce qu'**une commande de sécurité cellulaire (S3) prioritaire émet des signaux supplémentaires pertinents pour la sécurité vers les commandes de sécurité (S1) de plusieurs machines (1), et/ou
**en ce que** les signaux relatifs à la sécurité, délivrés par la commande de sécurité (S1), sont traités de préférence par les commandes de machine (A1), les composants périphériques de sécurité (A2) et/ou la technique d'entraînement (A3) de la machine concernée, pour introduire un état de sécurité par rapport à d'autres commandes, en particulier par rapport à une commande de sécurité cellulaire (S3) prioritaire.

2. Procédé selon la revendication 1, **caractérisé en ce que** la commande de sécurité (S1) transmet les signaux de commande relatifs à la sécurité vers la technique d'entraînement (A3) via une interface de sécurité (S2) d'entrée et de sortie et/ou en contournant les composants périphériques de sécurité (A2).

3. Dispositif (E0 ; E01, E02, E03) destiné à commander au moins une machine, telle qu'un robot industriel, comportant respectivement au moins une technique d'entraînement (A3) pour actionner la machine, une commande de robot (A1), qui est reliée à la technique d'entraînement (A3) par l'intermédiaire d'un premier système de liaison (V1), et comportant des composants périphériques de sécurité (A2), qui sont reliés à une commande de sécurité (S1) par l'intermédiaire d'un premier système de liaison de sécurité (V3 ; V6), les composants périphériques de sécurité (A2) étant reliés à la technique d'entraînement (A3) par l'intermédiaire de la commande de sécurité (S1), **caractérisé en ce que** le dispositif est configuré pour la mise en oeuvre d'un procédé selon la revendication 1.

4. Dispositif selon la revendication 3, **caractérisé en ce que** les composants périphériques de sécurité (A2) sont reliés à la commande de machine (A1) par l'intermédiaire de la commande de sécurité (S1).

5. Dispositif selon la revendication 4, **caractérisé en ce que** les composants périphériques de sécurité (A2) sont reliés tant à la technique d'entraînement (A3) qu'à la commande de machine (A1) exclusivement par l'intermédiaire de la commande de sécurité (S1).

6. Dispositif selon l'une quelconque des revendications 3 à 5, **caractérisé en ce que** la liaison entre la technique d'entraînement (A3) et la commande de sécurité (S1) est assurée par l'intermédiaire d'un deuxième système de liaison de sécurité (V5).

7. Dispositif selon la revendication 6, **caractérisé en ce que** le premier système de liaison de sécurité (V3 ; V6) et le deuxième système de liaison de sécurité (V5, V6) sont réalisés selon un câblage fixe et redondant, ou sont guidés en passant par des interfaces de sécurité (S2, S4).

8. Dispositif selon l'une quelconque des revendications 3 à 7, **caractérisé en ce que** la commande de machine (A1) est reliée à la commande de sécurité (S1) via une autre voie de communication (V2, V4).

9. Dispositif selon la revendication 8, **caractérisé en ce que** l'autre voie de communication (V4) est réalisée sous la forme d'une liaison de sécurité.

10. Dispositif selon l'une quelconque des revendications 3 à 9, **caractérisé en ce que** la première liaison (V1) est guidée via au moins une des liaisons de sécurité (V5) ou via d'autres voies de communication (V4, V2) ou V5 - V6 - V4.

11. Dispositif selon l'une quelconque des revendications 3 à 10, **caractérisé en ce que** la commande de sécurité (S1) est reliée à une commande de sécurité cellulaire (S3) prioritaire via un autre système de liaison de sécurité (V7).

12. Dispositif selon l'une quelconque des revendications 3 à 11, **caractérisé en ce que** la commande de sécurité (S1) est réalisée de manière librement programmable.

13. Dispositif selon la revendication 12, **caractérisé en ce que** la commande de sécurité (S1) comporte des éléments fonctionnels non physiques pré-configurés, qui sont mis à disposition en fonction de l'agencement, de la fonction et du nombre des machines (1) et qui sont adressables pour la commande d'une fonction de sécurité respective.
